# EUROPEAN PATENT SPECIFICATION

(11) **EP 4 399 895 B1**
(45) Date of publication and mention of the grant of the patent: **26.11.2025**
(21) Application number: 22789981.2
(22) Date of filing: 12.09.2022
(51) Int. Cl.: H04W 8/18, H04W 8/20, H04W 12/06, H04W 60/00

(54) **NETWORK CONNECTIVITY**
NETZWERKKONNEKTIVITÄT
CONNECTIVITÉ DE RÉSEAU

(30) Priority: 10.09.2021 GB 202112967
(43) Date of publication of application: 17.07.2024
(73) Proprietor: Truphone Limited, London, EC4N 6EU (GB)
(72) Inventor: SANTOS, André Alves Rogério, London, EC4N 6EU (GB); CASAL, João Afonso Vieira, London, EC4N 6EU (GB); RADZEVICH, Dmitry, London, EC4N 6EU (GB); PALMA, Frederico Alexandre de Matos M, London, EC4N 6EU (GB); PINTO, Victor Manuel Vieira, London, EC4N 6EU (GB); SANTOS, Hugo Filipe Neves, London, EC4N 6EU (GB); MORGADO, Carlos Hugo Baptista, London, EC4N 6EU (GB); MACKENZIE, Scott, London, EC4N 6EU (GB)
(74) Representative: EIP
(86) International application number: PCT/GB2022/052305
(87) International publication number: WO 2023/037128

(56) References cited:
- WO-A1-2021/063973
- US-A1- 2019 313 240
- US-A1- 2021 044 947
- US-A1- 2022 225 083

## Description

### Technical Field

The present invention relates to telecommunications and in particular to a cellular network authentication method to obtain cellular network connectivity.

### Background

Generally, Internet of Things (IoT), Machine to Machine (M2M), and consumer devices are arranged to use a Universal Integrated Circuit Card (UICC) or, in recent implementations, an embedded Universal Integrated Circuit Card (eUICC), also referred to as embedded Subscriber Identification Module (eSIM), an integrated Universal Integrated Circuit Card (iUCC) or a software-based SIM (soft SIM) for purposes of authentication to a Mobile Network Operator (MNO) or to a Mobile Virtual Network Operator (MVNO) and access the services provided by said network. The UICC is in the form of a small card that can be inserted and removed from the device. The eUICC is also a small chip that is inserted into devices in a non-removable way. The iUICC consists of a system-on-chip solution in which the UICC capabilities run on the device chipset. The soft SIM comprises a collection of software applications and data that performs all the functionality of a SIM card but does not reside in any kind of secure data storage or use a secure processor and is, instead, stored in the memory and processor of the communications device itself (i.e. there is no SIM hardware).

Within the present description, a secure module may be any of UICC, eUICC, iUICC or soft SIM that can be included in IoT devices, M2M devices, or other devices.

In the cases of UICC, eUICC, iUICC, and soft SIM, the authentication and access to services provided by a mobile network may be performed through Remote SIM Provisioning, that is, the downloading, installing and enabling of an operational profile, also referred to as SIM profile, Over The Air (OTA).

The presence of secure modules such as UICCs, eUICCS, iUICCs or soft SIMs in IoT devices, M2M devices, and other devices is increasing, and it may be possible to provide connectivity out of the box. Relevant prior art disclosures in this technical field are: US 2019/313240 A1, US 2021/044947 A1.

### Summary

According to a first aspect of the present disclosure, there is provided a computer-implemented method for a host device, the computer-implemented method comprising:
performing a first process at a first time, the first process comprising using non-cellular data connectivity to download a profile data structure, the profile data structure comprising a set of two or more International Mobile Subscriber Identities, IMSIs, and authentication data; and
performing a second process at a second time, the second time being after the first time, the second process comprising:
   selecting an IMSI from the set of IMSIs; and
   attempting to register with a cellular network using the selected IMSI and the authentication data to obtain cellular network connectivity.

According to a second aspect of the present disclosure, there is provided a host device comprising at least one processor and storage comprising computer-executable instructions which, when executed by the at least one processor, cause the at least one processor to perform computer-implemented methods according to the first aspect.

According to a third aspect of the present invention, there is provided a non-transitory computer-readable storage medium, comprising computer-executable instructions which, when executed by at least one processor, cause the at least one processor to perform methods according to the first aspect.

According to a fourth aspect of the present disclosure, there is provided a computer-implemented method for enabling a host device to obtain cellular network connectivity, the method comprising:
receiving a request to provide a profile data structure to a host device; and
transmitting the profile data structure for receipt by the host device,
wherein the profile data structure comprises a first set of two or more International Mobile Subscriber Identities, IMSIs, and authentication data, and
wherein the first set of two or more IMSIs are selected from a second set of three or more IMSIs.

According to a fifth aspect of the present disclosure there is provided a network element for authenticating a host device to a cellular network, the network element being configured to perform operations comprising:
receiving an authentication request from a host device, wherein the host device is using either:
   a shared IMSI that is included in a plurality of profile data structures which are available to a plurality of host devices; or
   a private IMSI that is uniquely included in a profile data structure of the host device;
accessing information that identifies an IMSI used by the host device as being either a shared IMSI or a private IMSI; and,
responding to the authentication request in a manner which is dependent on whether the host device is using a shared IMSI or a private IMSI.

According to a sixth aspect of the present disclosure there is provided a computing system communicatively coupled to a cellular network, the system comprising at least one processor and storage comprising computer-executable instructions which, when executed by the at least one processor, cause the computing system to perform methods according to the fourth aspect.

According to a seventh aspect of the present disclosure there is provided a non-transitory computer-readable storage medium comprising computer-executable instructions which, when executed by at least one processor, cause the processor to perform methods according to the fourth aspect.

Many host devices are only registered to a cellular network for a short period of time, that is, the host device may have a low duty cycle and only require an IMSI while it is registered with a cellular network for cellular connectivity. Thus, embodiments of the present disclosure may be useful in allocating to a plurality of host devices profile data structures sharing the same IMSIs to be used while the host device is registered with a cellular network. The systems and methods described herein can enable reuse of a shared IMSI by a plurality of host devices at different points in time. This way mobile network operators and mobile virtual network operators may manage the available IMSIs in a more efficient manner. The present invention is particularly useful in diminishing collision probability when using one of the shared IMSIs to register with a network and also in recovering from a collision with another host device using the same shared IMSI to register with a network.

Further features and advantages of the present disclosure will become apparent from the following description of preferred embodiments, given by way of example only, which is made with reference to the accompanying drawings.

### Brief Description of the Drawings

Figure 1 is a schematic diagram of a host device comprising a secure module according to examples;
Figure 2 is a flow diagram showing a computer-implemented method for a host device according to examples;
Figure 3 is a schematic diagram showing a cellular network, a host device, and illustrating computer-implemented methods according to examples;
Figure 4 is a flow diagram showing a computer implemented method for enabling a host device to obtain cellular network connectivity according to examples;
Figure 5 is a schematic diagram showing a simplified version of the cellular network and illustrating computer implemented methods according to examples;
Figure 6 is a schematic diagram showing a test server and a part of a connection test procedure according to examples;
Figure 7 is a schematic diagram illustrating a non-transitory computer readable storage medium comprising instructions for performing a method according to the examples shown in Figure 2;
Figure 8 is a schematic diagram showing a computing system configured to perform a method according to the examples shown in Figure 4;
Figure 9 is a schematic diagram showing a non-transitory computer readable storage medium comprising instructions for performing a method according to the examples shown in Figure 4;
Figure 10 is a schematic block diagram showing a network element embodied as a home server and a plurality of host devices according to examples;
Figure 11 is a flow diagram showing a method performed by the network element according to the examples shown in Figure 10

### Detailed Description

As mentioned briefly above briefly in the background section of the application, it may be possible to provide connectivity out of the box for IoT, M2M, and other host devices comprising secure modules such as UICCs, eUICCS, iUICCs or soft SIMs. In order to do so, a secure module may use a provisioning profile, also referred to as bootstrap profile, to access a marketplace and a Remote SIM Provisioning, RSP, platform without the need for a WIFI connection.

The marketplace and RSP platform may enable the user to seamlessly purchase a connectivity plan from its provider of choice thus enabling cellular network connectivity. This may be achieved through the following steps:
1- Device boot up upon unboxing,
2- Device establishes limited connectivity using a pre-configured provisioning profile,
3- User accesses a marketplace and purchases a plan,
4- Device downloads an operational profile from the RSP platform,
5- Device establishes full connectivity using the new operational profile.

The secure module identifies a subscription, either an IoT device, an M2M device, or a mobile device, through an International Mobile Subscriber Identity, IMSI. The IMSI is a globally routable identity assigned to an operator, which is globally unique to allow signalling routing between operators.

One potential way of providing connectivity out of the box, as described above, may require every single IoT, M2M and other mobile devices to be configured with a working provisioning profile at manufacture, which requires a very large number of IMSIs to be allocated. This scenario may lead to an increased demand for IMSIs and possibly to the exhaustion of the global IMSI numbering reserve.

However, depending on the type of device and usage profile, it is possible that several devices will never use the provisioning profile and associated IMSI either because they never use the secure module capability or will use the device over WIFI access. Therefore, it is desired to more efficiently manage IMSI allocation in order to optimise the use of the resource.

Certain examples described herein describe methods and systems for providing profile data structures that can be allocated to host devices for the purposes of authentication with a cellular network and accessing connectivity provided by the cellular network. The profile data structures may share International Mobile Subscriber Identities, IMSIs, with other profile data structures. The systems and methods described herein can enable reuse of one or more shared IMSIs by a plurality of host devices. A host device may use one of the shared IMSIs provided in a profile data structure to access connectivity provided by the cellular network and, when the host device deregisters from the cellular network, the shared IMSI may be freed for use by another host device. In this way, mobile network operators (MNO) and mobile virtual network operators (MVNO) may manage the use of IMSIs which are available to that MNO or MVNO in a more efficient manner. That is to say, IMSIs that are available to the MNO or MVNO can be reused by different host devices thereby reducing the number of IMSI which may be wasted when allocated to a host device which does not persistently use the IMSI. No two host devices may concurrently use the same IMSI to connect to a cellular network.

If a host device is registered using a particular IMSI and subsequently, or shortly thereafter, another host device attempts to register using the same IMSI, then the cellular network may react in a non-optimal or unpredictable way, such as authorizing the second device in lieu of the existing network access of the first device, or rejecting the registration of the second device. These scenarios may be referred to as a collision. The present invention is particularly useful in diminishing collision probability when using one of the shared IMSIs to register with a network and also in recovering from a collision with another host device already registered with the cellular network using a shared IMSI. The present solution may overcome the state-of-the-art limitations as it allows the allocation of the same IMSI to a plurality of profile data structures. This IMSI, shared amongst a plurality of profile data structures, can be used by a host device when no other host device is using the IMSI, while also reducing collisions likelihood of two or more host devices trying to use the same shared IMSI. The present solution also provides methods for solving collision events between host devices trying to use the same shared IMSI.

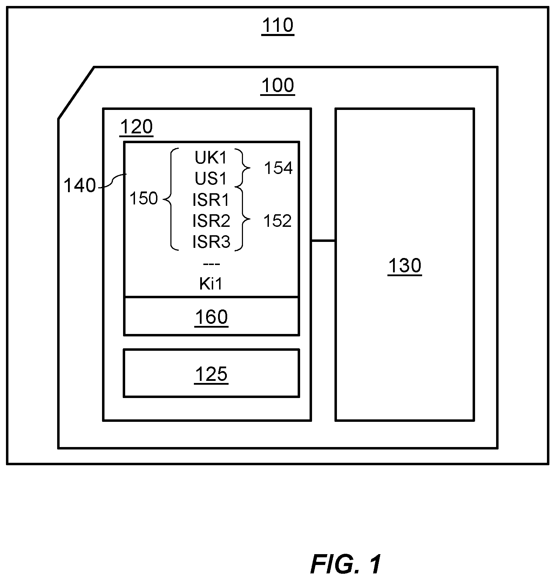

Figure 1 illustrates a secure module 100 included in a host device 110. In some examples, the host device 110 may be a consumer device, or a machine or object in an IoT or M2M context. In some examples, the host device may be a mobile device, for example a smartphone or laptop. In other examples, the host device may be installed permanently or semi-permanently at a location, for example an appliance or other machines in a home or industrial setting. In this example the host device 110 includes a secure module 100 in the form of a SIM card. However, it will be appreciated that the secure module 100 may comprise a UICC, an eUICC, an iUICC or a soft SIM. In some examples, the methods described herein may be implemented by either a UICC or an eUICC.

The secure module 100, shown in Figure 1, comprises at least one processor 130 and at least one computer-readable storage 120. The at least one processor 130 may be communicatively coupled to the at least one computer-readable storage 120 and may be configured to execute instructions 125 stored on the at least one computer-readable storage 120. The at least one processor 130 may possess proactive capacity in the sense that it is able to interact directly with the host device 110 informing the host device 110 that a configuration of one or more settings has changed, for example, where an IMSI to be used to register with a cellular network has changed.

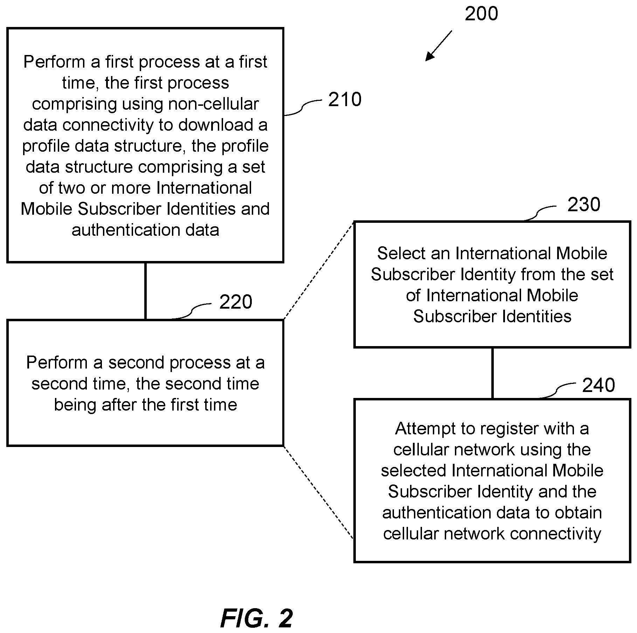

The at least one computer-readable storage 120 includes a profile data structure 140 that may be used to register with a cellular network and obtain cellular network connectivity as will be described later with respect to Figure 2. The profile data structure 140 comprises a set of two or more IMSIs 150 and authentication data 160. In some examples, a single set of authentication data 160 is associated with each IMSI of the set of IMSIs 150. The set of IMSIs 150 comprises one or more shared IMSIs 152, which are included in a plurality of profile data structures that are available to one or more further host devices. For example, a shared IMSI may be included in at least one other profile data structure stored in the secure module of another host device. As the shared IMSIs are generally included in a plurality of profile data structures which are made available to a plurality of host devices, when a host device 110 attempts to register with a cellular network using a shared IMSI, the registration will be successfully processed if no other host device is using the same shared IMSI to be registered with a cellular network at the same time.

Alternatively, or additionally, the one or more shared IMSIs may be included in at least one other profile data structure which can be downloaded by a further host device, but which have not yet been provided to a further host device. In some examples, the one or more shared IMSIs may include region independent IMSIs associated with region independence indication data. A region independent IMSI can also be referred to as International Sponsored Roaming IMSI, ISR IMSI, which refers to an IMSI that is included in a sub range of a global IMSI range of a Mobile Network Operator, MNO, and is assigned to a network partner operator so that subscribers of the network partner operator are able to access the network of the MNO when roaming between cellular networks. Region independent IMSIs are thus not associated to a particular geographic region. Alternatively, or additionally, the one or more shared IMSIs 152 may include region dependent IMSIs associated with region dependence indication data. A region dependent IMSI is an IMSI that is associated with a particular geographic region, typically a country.

When a first host device registers with a cellular network using a shared IMSI and subsequently deregisters, said shared IMSI may be used by a second host device to register with a cellular network. The set of IMSIs 150 also comprises one or more private IMSIs 154. The one or more private IMSIs are uniquely included in the profile data structure 140 downloaded to the host device 110 such that they are only available to the host device 110 and not to other host devices which are provided with a profile data structure. The private IMSIs 154 may include region independent IMSI and/or a region dependent IMSI. In the example shown in Figure 1, the shared IMSIs 152 includes region independent IMSIs and the private IMSIs 154 include region dependent IMSIs, however, as described above both the shared and private IMSIs may include either or both region independent and region dependent IMSIs.

The regional indication data and the region-independence indication data may be included as part of the IMSIs to which they relate. IMSIs typically include 15-digit numbers, although can be shorter in some territories where older standards of IMSI are used. The first three digits of an IMSI typically represent a mobile country code, MCC, which is followed by a mobile network code, MNC, which is either two digits (according to European standards), or three digits (according to North-American standards). The remaining digits are referred to as the mobile subscription identification number, MSIN. The regional independence indication data, or the regional indication data, may be the MCC included as part of the IMSI. Where the IMSI is a region dependent IMSI, the MCC relates to the region to which the IMSI is associated. Where the IMSI is a region independent IMSI, the first three digits of the IMSI which would normally be the MCC may not relate to an MCC associated with any particular region.

Figure 2 is a flow diagram illustrating a computer-implemented method 200 for a host device 110 comprising a secure module 100 to obtain cellular network connectivity. The instructions 125 stored in the storage 120 may, when executed by a processor 130, cause the processor to implement the method 200. The computer-implemented method 200 may be triggered upon boot up of a host device 110 for the first time to register with a cellular network to obtain cellular network connectivity. The computer-implemented method 200 may also be triggered when the host device 110 detects a need to download a profile data structure 150 or a need for cellular network connectivity. For example, if the secure module 100 lacks a suitable profile data structure 140 which can be used to obtain cellular network connectivity. The method 200 may also be triggered based on an input signal, for example, where a user of the host device 110 interacts with a user interface (not shown) of the host device 110 to provide an input signal which specifies that the method 200 is to be triggered.

At block 210, the computer-implemented method 200 comprises performing a first process at a first time, the first process comprising using non-cellular data connectivity to download a profile data structure 140. The non-cellular data connectivity can be any suitable means for obtaining data connectivity, for example WiFi^{®}, Bluetooth^{®}, or any other suitable type of data connectivity. The non-cellular data connectivity may include wired and/or wireless data communication means. As described above in relation to Figure 1, the profile data structure 140 comprises a set of two or more IMSIs 150 and a single set of authentication data 160 associated with each IMSI of the set of IMSIs 150. In the examples shown, this set of IMSIs 150 comprises one or more shared IMSIs 152 and also comprises one or more private IMSIs 154. In some examples, the profile data structure 140 may include a private IMSI which is to be most frequently used by the host device 110. A subscriber may be provided with a private IMSI which corresponds to the region in which they are most often located, e.g. their home country. The profile data structure 140 may also comprise a plurality of shared IMSIs which can be used when the subscriber is travelling to different countries. For example, the shared IMSIs may include region dependent and region independent shared IMSIs which can be used on a temporary basis when the subscriber is travelling to different territories. The subscriber may have one or more countries which they travel to very frequently and hence the profile data structure 140 may include region dependent private IMSIs corresponding to those countries in which the subscriber frequently travels.

In some cases, the first process to download a profile data structure may be performed during manufacture, for example, certain host device manufacturers may include items, such as the profile data structure 140, on the secure module 100 included in the host device 110 during manufacture of the host device 110 before providing the host device 110 to users. In these cases, the first process of the method 200 may be triggered during manufacture of the host device 110 before providing the host device 110 to users.

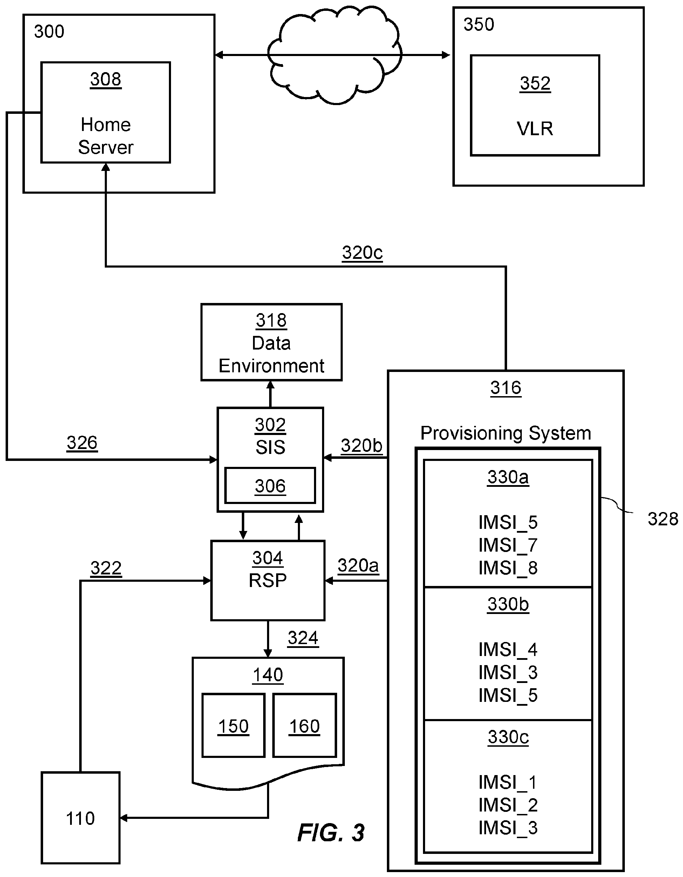

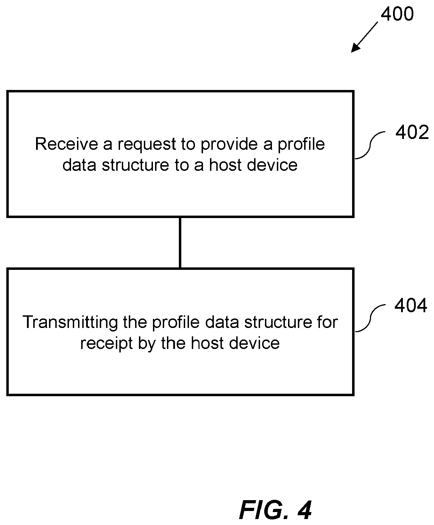

Turning briefly to Figure 3, once the first process is triggered, the first process may include a host device 110 initially transmitting a request 322 for the provision of a profile data structure 140 to the host device 110. The request 322 may be transmitted to one or more remote computing devices which are configured to perform methods for enabling the host device 110 to obtain cellular network connectivity as will be described further below with respect to Figures 3 and 4. A response 324 including the profile data structure 140 is transmitted for receipt by the host device 110. The profile data structure 140 comprises a set of two or more IMSIs 150 and authentication data 160 associated with the set of IMSIs 150.

Returning to Figure 2, at block 220 the computer-implemented method 200 comprises performing a second process at a second time, the second time being after the first time. The second process may be triggered independently of the first process, for example the profile data structure 140 may be downloaded to the secure module 100 included in the host device 110 during manufacture and the second process can be triggered upon boot up of the host device 110 for the first time to register with a cellular network to obtain cellular network connectivity. Alternatively, or additionally, the second process may be triggered when the host device detects a need for cellular network connectivity, for example, where the host device 110 is configured to obtain cellular network connectivity on boot up and if cellular network connectivity is not already available at boot up. Other examples may include where a user of the host device 110 instructs the host device 110, through a user interface, to perform a process which requires cellular network connectivity, and the host device 110 does not already have cellular network connectivity.

In some cases, the host device 110 may be lacking multiple types of connectivity at the second time. For example, as well as lacking cellular network connectivity, the host device may not have non-cellular data connectivity. For example, the host device may not have access to an internet connection over WiFi^{®}, or any other type of non-cellular data connectivity and so is not capable of downloading any further data at the second time, such as another IMSI, which could be used to attempt to register with a cellular network.

As shown in Figure 2, at block 230 the second process performed at the second time comprises selecting an IMSI from the set of IMSIs 150. In some examples, the host device 110 may select the IMSI from the set of IMSIs 150 while in other examples the second process includes activating the profile data structure 140 that consequently selects an IMSI from the set of IMSIs 150. The IMSI which is selected may be either of a private IMSI or a shared IMSI.

In some cases, the selection of a private IMSI may be prioritized over the selection of a shared IMSI. In other examples, the selection of a shared IMSI may be prioritized over the selection of a private IMSI. The prioritization of either a private or shared IMSI may be determined based on settings specified in the host device 110 and/or in the profile data structure 140. In some examples, a user of the host device 110 may be able to provide an input which specifies whether a private or a shared IMSI is to be selected and the selection of the IMSI may be sensitive to this input.

Where a private IMSI is selected from the set of IMSIs 150, a private IMSI which is associated with a location of the host device 110 at the time of performing the second process may be selected. In this way a host device 110 may select an IMSI which is associated with the location of the host device 110 and hence may appear to a visited network as being a local subscriber. In some cases, a suitable private IMSI, for example a private IMSI associated with the location of the host device 110, may not be available in the profile data structure 140 at the second time, and so the host device 110 may select a shared IMSI 152. In some cases, while there may be a suitable private IMSI available, a shared IMSI may still be selected. In some cases, the profile data structure 140 may only include shared IMSIs. The type of IMSIs included in the profile data structure 140 may be dependent on the type of subscription of the user. For example, a user's subscription may allow for a set of region dependent private IMSIs and a set of region independent shared IMSIs, as shown in Figure 1.

If the set of one or more IMSIs 150 comprises a plurality of shared IMSIs 152, then selecting a shared IMSI may include selecting a shared IMSI which corresponds to the region in which the host device 110 is located, e.g. a region dependent shared IMSI. Where a suitable region dependent shared IMSI is not available, a region independent shared IMSI may be selected. If there are a plurality of region independent shared IMSIs in the set of IMSIs 150, the region independent shared IMSI may be selected at random from two or more region independent shared IMSIs 152 in the profile data structure 140 or based on a respective position in a list of region independent shared IMSIs stored in the profile data structure 140.

To determine whether a region dependent IMSI or a region independent IMSI is to be selected, the second process may comprise determining a geographic location of the host device 110 at the second time. The geographic location of the host device 110 may be determined in any of a plurality of ways. In some examples, determining the geographic location comprises receiving at the cellular network 300 a location update message, communicating with proximal computing devices such as servers, routers, or mobile devices over any suitable wired or wireless communication means. Where the host device 110 is located within the region of a home cellular network 300, the cellular network 300 may determine directly from a communication from the host device 110 that the host device 110 is in the region of the cellular network 300. Where the host device 110 is in a region associated with a different cellular network, for example a visited network 350, the cellular network 300, which may be a home network of the host device 110, may receive a location update message from the visited network 350.

Determining the geographic location may also be performed based on a stored indication of the geographic location of the host device 110 or any other examples of determining a geographic location that are suitable. Following the determination of the geographic location of the host device 110, selecting an IMSI from the set of IMSIs 150 included in the profile data structure 140 may include selecting a region dependent IMSI associated with the geographic location of the host device 110. For example, where the host device 110 is located in the United Kingdom (UK), then an IMSI comprising an MCC which is associated with the UK may be selected.

The private IMSIs are uniquely included in the profile data structure 140 downloaded to the host device 110 and not in other profile data structures provided to further host devices. As such, the private IMSIs in the set of IMSIs 150 included in the profile data structure 140 are only available for use by the host device 110 and may be used at any time to register with a cellular network.

Following the selection of an IMSI, the second process comprises, as shown in Figure 2 at block 240, attempting to register with a cellular network using the selected IMSI and the authentication data 160 to obtain cellular network connectivity. The cellular network to which the host device 110 attempts to register may be the home network 300 of the subscriber, or may be a different cellular network 350, such as a visited cellular network 350 of a region to which a user of the host device 110 has travelled.

To register with a cellular network 300, 350, with a private IMSI, the host device 110 sends an authentication request including a private IMSI and authentication data. If the host device 110 is in a visited cellular network 350 at the second time, the authentication request is sent to the Visitor Location Register, VLR, 352 of the cellular network 350 to which the host device 110 is attempting to register, using the selected private IMSI. The VLR 352 communicates with the HSS 308 of the subscriber's home network by sending a Subscriber Authentication Information, SAI, message to the HSS 308. The HSS 308 responds to the Subscriber Authentication Information, SAI, message accepting the registration. In this way the registration attempt is successfully processed, and the host device 110 connects to the visited cellular network 350 and may obtain cellular network connectivity. If the host device 110 is located in the home network of the subscriber, then a VLR 352 may not be used, and the request may be sent to the HSS 308 of the subscriber's home network without using a VLR. The HSS 308 may in this instance respond to the authentication request accepting the registration without sending the response via a VLR. This process is generally the same regardless of whether the private IMSI is a region dependent IMSI, associated with the region in which the VLR is located, or a region independent IMSI.

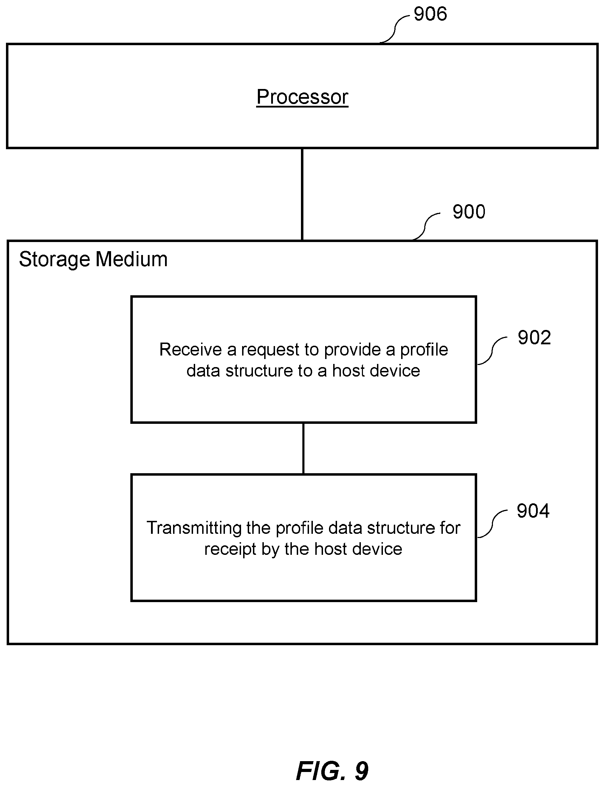

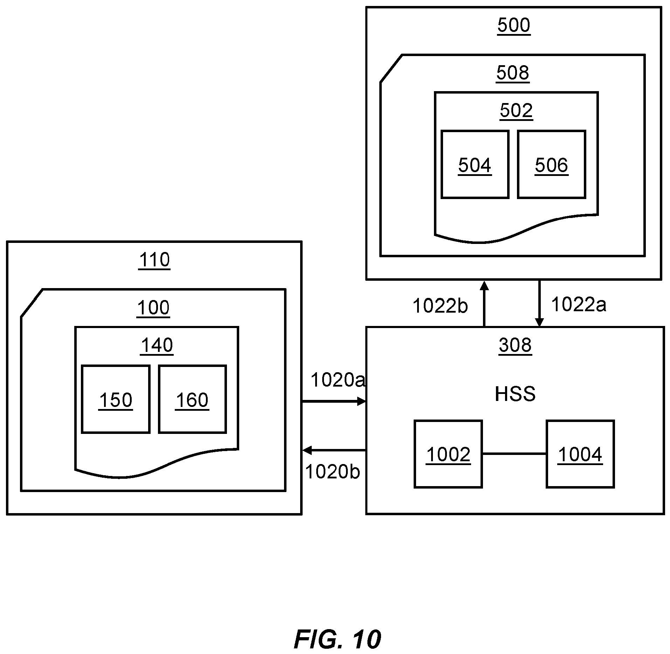

This process may be modified if the selected IMSI is a shared IMSI. If the selected IMSI is a shared IMSI, the HSS 308 of the subscriber may check whether the selected IMSI is being used by any other host device. If the said shared IMSI is being used by any other host device in another VLR, or the same VLR, the HSS 308 of the subscriber responds to the SAI message refusing the registration. The function of the HSS 308 will be described later below with respect to Figures 9 and 10.

If the attempt to register with a cellular network 300, 350 using the selected IMSI is unsuccessful, for example, where a shared IMSI is used when attempting to register with the cellular network 300, 350, but a further host device is using the shared IMSI at the second time, the second process may comprise selecting a further IMSI from the set of IMSIs 150 to be the selected IMSI and attempting to register with the cellular network 300, 350 using this further IMSI as the selected IMSI.

In some cases, the attempt to register with the cellular network 300, 350 using the selected IMSI may be successful, but no cellular network connectivity is provided to the host device 110. In this case the method 200 may comprise selecting a further IMSI from the set of IMSIs 150 to be the selected IMSI and attempting to register with the cellular network using the further IMSI as the selected IMSI. The lack of cellular network connectivity may be detected by a set of instructions included in the memory, or storage 120, of the secure module 100 included in the host device 110. For example, the instructions, when executed by the processor 130 of the secure module 100, may cause the processor 130 to attempt to communicate with the internet to detect if there is cellular network connectivity. A communication relating to the connectivity of the host device 110 may be sent to a Smart IMSI Selection module, SIS, 302 the function of which will be described further below with respect to Figure 4. In some cases, the lack of cellular network connectivity may be detected after a predetermined period of time has passed since the successful registration. This period of time may be configurable. In this way, it is possible to prevent premature re-registration of the host device 110 with a different IMSI of the set of IMSIs 150.

Where a shared IMSI is used, upon termination of a communication session which has been enabled by the registration of the host device 110 to the cellular network 300, 350 using the selected shared IMSI, the selected shared IMSI may be deregistered. Following deregistration of the shared IMSI, the said shared IMSI can be used by a different host device to register with a cellular network 300, 350. In this way, shared IMSIs can be allocated to a plurality of profile data structures 140 which are made available to a plurality of host devices, e.g. the host device 110 and one or more further host devices, to use to register with a cellular network 300, 350. Due to the deregistration of a shared IMSI after the communication session has ended it becomes possible to use the shared IMSIs across a plurality of host devices. As such, these shared IMSIs can be provided in profile data structures which relate to bootstrap profiles and/or fully operational profile without the shared IMSIs being wasted and going unused, as can happen with IMSIs included in bootstrap profiles.

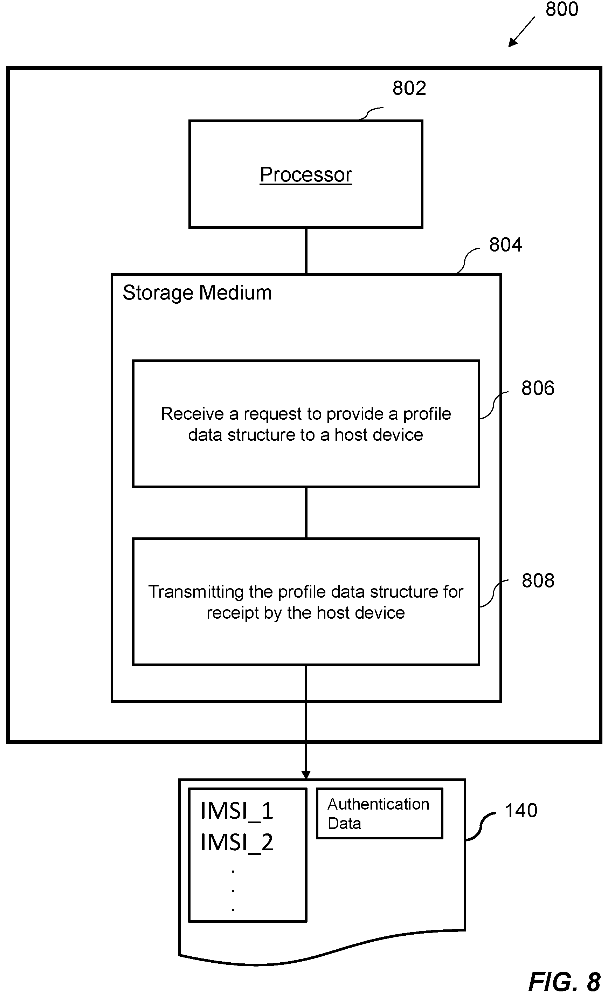

Returning to the example of a cellular network 300 shown in Figure 3 and also with reference Figure 4 a method 400 for enabling a host device to obtain cellular network connectivity will now be described. The method 400 may be implemented by a computing system shown in detail and described with respect to Figure 8. A specific example of the functions which may be implemented by the computing system is shown in Figure 3 implemented as a Remote SIM Provisioning module (RSP) 304, a Smart IMSI Selection module (SIS) 302, a Provisioning System 316, and a data environment 318. The functions of the RSP 304, SIS 302, and the Provisioning System 316 will become apparent from the description of the method 400.

The RSP module 304 receives 402 a request 322 to provide a profile data structure 140 to the host device 110. In the example shown, the request 322 is received directly from the host device 110 and may be received over any suitable communication protocol such as Wi-Fi, Bluetooth, other wireless communications protocols and wired communication protocols.

The RSP 304 may then transmit 404 the profile data structure 140 for receipt by the host device 110 in the form of the response 324. The profile data structure 140 comprises a first set of two or more IMSIs 150 and authentication data 160, the authentication data 160 being associated with the first set of two or more IMSIs 150. In some examples, a single set of authentication data is provided for all IMSIs in the first set of IMSIs 150. In other examples, the authentication data 160 may include a different set of authentication data for each IMSI or for different subsets of IMSIs in the first set of IMSIs 150.

The computing system implemented as the RSP module 304, SIS module 302, and the provisioning system 316 may be responsible for generating the profile data structure 140 which is provided for the host device 110. The first set of two or more IMSIs 150 which are provided in the profile data structure 140 are selected from a second set of three or more IMSIs 328. In the example shown, the second set of three or more IMSIs 328 is arranged into a plurality of batched sets of IMSIs 330a, 330b, 330c although in other examples, the IMSIs 328 may not be batched in this way. The second set of IMSIs 328 may comprise IMSIs which can be made available to subscribers of the home cellular network 300. For example, an MNO may have a range of IMSIs which it can enable subscribers to use to register with the MNO and/or cellular networks in other regions. The range of IMSIs associated with this MNO may include both shared IMSIs and private IMSIs. In this way, each host device 110 which implements the method 200 is generally provided with a subset of the total range of IMSIs which are potentially available to that host device 110.

While the request 322 shown in Figure 3 is sent by the host device 110 and received at the RSP 304, it will be appreciated that the request 322 may be received from computing devices different to the host device 110 but sent on behalf of the host device 110. For example, where the host device 110 is to be provisioned with a profile data structure 140 at manufacture, the profile data structure 140 may be downloaded by a manufacturer to be provisioned onto the host device 110 at manufacture. In this case, the manufacturer may communicate with an RSP 304 to generate the profile data structure 140 to be provided to the secure module 100 at manufacture.

In response to this request 322, the RSP 304 transmits a request to the SIS 302 for the provisioning of a set of two or more IMSIs 150. The request transmitted by the RSP 304 to the SIS 302 may include data which identifies the geographic location of the host device 110. For example, the request transmitted by the RSP platform 304 to the SIS 302 may include the IP address of the host device 110 requesting the profile data structure 140. In examples, where a manufacturer is attempting to obtain a profile data structure 140 to provide to a device at the manufacturing stage, a signal identifying a geographic location in which the host device 110 is to be used may be provided. Following the request from the RSP platform 304, the SIS 302 performs a selection operation to select a batched set of two or more IMSIs 150 from the plurality of batched sets 330a, 330b, 330c.

In the example shown, the Provisioning System 316 batches the second set of IMSIs 328 into a plurality of batched sets of two or more IMSIs 330a, 330b, 330c. Each batched set of IMSIs 330a, 330b, 330c may comprise at least one shared IMSI and, in some examples, at least one private IMSI. The batched sets 330a, 330b, 330c generated from the second set of IMSIs 328 may be at least partially randomly selected. That is to say that each batched set may comprise at least one randomly selected shared IMSI and/or at least one randomly selected private IMSI. This may allow the IMSIs in the second set of IMSIs 328 to be distributed evenly across the batched sets of IMSIs 330a, 330b, 330c. In the example shown, a first batched set 330a comprises a shared IMSI, IMSI_5, and two private IMSI, IMSI_7 and IMSI_8. A second batched set 330b, comprises a plurality of shared IMSIs, IMSI_3 and IMSI_5, and a private IMSI, IMSI_4. The third batched set 330c shown comprises one shared IMSI, IMSI_3, and two private IMSIs, IMSI_1 and IMSI_2.

The Provisioning System 316 may associate each of the batched sets of IMSIs 330a, 330b, 330c with respective authentication data, not shown. For example, the Provisioning System 316 may associate each of the batched sets of IMSIs 330a, 330b, 330c with an authentication data identifier, which identifies a particular set of authentication data which is to be attached to a batched set of IMSIs 330a, 330b, 330c. Shared IMSIs of the second set of IMSIs 328 may be included in a plurality of the batched sets 330a, 330b, 330c of IMSIs, such that a plurality of profile data structures 140 generated from the batched sets may comprise one or more of the same shared IMSIs. The private IMSIs may be uniquely included in a batched set of IMSIs such that, once provided to a host device 110 in a profile data structure 140 they are only available for use by that host device 110 and not by other host devices.

The Provisioning System 316 transmits 320a, 320b, and 320c the batched sets 330a, 330b, 330c of two or more IMSIs and an association with the respective authentication data, such as an identifier of the respective authentication data, for receipt by network elements such as a Home Subscriber Server, HSS, 308, and for receipt by modules such as the SIS 302, and the RSP 304. The SIS 302 function includes a pool 306 of the plurality of batched sets of two or more IMSIs 330a, 330b, 330c along with identifiers of the authentication data which are associated with each set of IMSIs. The first set of two or more IMSIs 150 which is to be provided to the host device 110 is selected from the pool 306 by the SIS 302, that is to say one of the batched sets of IMSIs 330a, 330b, 330c, is selected to be the first set of IMSIs 150. Therefore, in examples where the batched sets of IMSIs 330a, 330b, 330c are randomly selected when batched, the first set of IMSIs 150 may be in at least one respect randomly related to the second set of IMSIs 328.

The SIS 302 then transmits the set of two or more IMSIs 150 and an identifier of a respective set of authentication data to the RSP 304. The identifier is to be used by the RSP 304 to identify the respective set of authentication data 160 which is to be associated with the set of IMSIs. The RSP platform 304 generates the profile data structure 140 which, as described above in relation to Figure 1, comprises the set of two or more IMSIs 150 and authentication data 160 associated with the set of IMSIs 150 which is identified by the identifier received from the SIS 302. By storing the authentication data 160 at the RSP 304 and transmitting only identifiers of the authentication data between the provisioning system 316, the SIS 302, and the RSP 304 the security and integrity of the authentication data 160 may be maintained. That is to say, the authentication data 160 may not be transmitted between different modules or over communications networks which might otherwise render it vulnerable to identification from third parties. The profile data structure 140 may then be transmitted 324 for receipt by the host device 110. The profile data structure 140 may be transmitted directly to the host device 110 or may be transmitted and received by an intermediate computing device which then is able to provide the profile data structure 140 to the host device 110.

As shown in the example of Figure 3, the cellular network 300 may comprise a Home Subscriber Server, HSS, 308 which provides details of the subscribers to other entities within the cellular network 300 and to other computing systems in communication with said network 300. For example, the HSS 308 may send a notification 326 informing the SIS 302 of the events where host devices register with a cellular network 300, 350 using a shared IMSI. In some examples, a Home Location Register, HLR, can take the place of the HSS 308 described herein, or be linked to an HSS 308, such that the HLR can perform the function of the HSS 308. In other examples, an Authentication Center, AuC, is linked to an HLR that can take the place of the HSS 308. It will be appreciated that while the present example of Figure 3 has been described with respect to an HSS 308, any home server may be suitable, wherein a home server can be implemented as any one or more of a Home Subscriber Server, HSS, an HLR a combined HSS/HLR, a combined HLR/AuC or any other similar element that can communicate with the entities within the cellular network 300 and the SIS 302 in the desired manner.

It will be appreciated that Figure 3 does not show all components of the cellular network 300, but rather those that are material to the present disclosure. In this example separate modules for the SIS 302, for the RSP platform 304, for the HSS 308 and for the Provisioning System 316 are shown. However, it will be appreciated that these modules 302, 304, 316, may be implemented as one or more computing devices, including any suitable combination of hardware and software, either located at a single geographic location or distributed over a geographic area, comprising suitable communications technology for communicating with one or more host devices 110. The cellular network 300 may also comprise interfaces for communicating with other networks and/or remote servers, for example, the internet. In some examples, the network elements described herein may be implemented by either one or many computing devices. While six communications 320a, 320b, 320c, 322, 324 and 326 have been shown in Figure 3, it will be appreciated that any number of signals may be transmitted in the cellular network 300 and between the cellular network 300, the host device 110, and the modules 302, 304, 316 when requesting, generating, transmitting, and/or receiving the profile data structure 140
In some cases, the selection of a batched set of two or more IMSIs 150 may be sensitive to the use of IMSIs by other host devices. As part of the operation to select the batched set of two or more IMSIs 150 from the pool 306, the SIS 302 may be continuously notified 326 by the HSS 308 of the activity of host devices using shared IMSIs which are included in the second set of IMSIs 328 from which the batched sets 330a, 330b, 330c of two or more IMSIs are generated. The SIS 302 stores the information relating to the uses of the shared IMSIs such as the time and location at which they have been used. The geographic location of a host device that is using a shared IMSI which is comprised in the second set of two or more IMSIs 328 from which the batched sets 330a, 330b, 330c are generated may be determined by the Calling Global Title which is provided to the SIS 302 by the HSS 308.

In examples where the SIS 302 has been notified by the HSS 308 of the activity of host devices using the shared IMSIs, the SIS 302, when selecting a batched set of IMSIs 150, may prioritise a batched set 150 which includes shared IMSIs which have not been recently used by other host devices. In this way, the SIS 302 may reduce the probability of providing a shared IMSI which is likely to cause a collision event when the host device 110 attempts to register with a cellular network 300, 350 using that shared IMSI.

In this way the use of a shared IMSI by the host device 110 may affect a further set of two or more IMSIs that are to be provided to a further host device. In other words, the selection operation performed by the SIS 302 when responding to a request from the RSP 304 to provide a set of two or more IMSIs, may prioritize batched sets of two or more IMSIs 330a, 330b, 330c based on the number of times that shared IMSIs comprised in the sets of two or more IMSIs of the pool 306 have been used by other host devices. In some examples, this prioritization is region dependent, such that selection operation performed by the SIS 302 prioritizes batched sets of IMSIs 330a, 330b, 330c based on the number of times that shared IMSIs have been used in the same geographic location of the host device 110 which is requesting the profile data structure 140.

In some examples, the prioritization of sets of two or more IMSIs 330a, 330b, 330c when selecting a set of IMSIs from the pool 306 is time dependent such that different IMSIs are prioritized at different points in time. For example, a particular set of IMSIs, comprising a given shared IMSI, which is initially prioritized may be provided to a host device 110 in a profile data structure 140. After the particular set of IMSIs has been provided to the host device 110, sets of IMSIs which do not include the given shared IMSIs may be prioritized over sets of IMSIs which do include the given shared IMSI. The prioritization of sets of IMSIs may continuously change over time based on an order in which IMSIs have been most recently, or most frequently, provided to host devices 110 in profile data structures 140.

The SIS 302 may prioritize shared IMSIs that were not used in the geographic location of the host device 110 requesting the profile data structure. If there are no shared IMSIs that have not recently been used in the geographic location of the host device 110 requesting the profile data structure 140, the SIS 302 may prioritize shared IMSIs based on the least number of times that the IMSIs have been used during a configurable period of time in the geographic location of the host device 110 requesting the profile data structure 140 to register with a cellular network 300, 350.

In some examples, a data environment 318 may be used for analytics purposes. As part of the selection operation, the SIS 302 may continuously notify the data environment 318 of the uses of IMSIs comprised in the pool 306 of batched sets of two or more IMSIs 330a, 330b, 330c. The SIS 302 may be notified by a host device 110 on how many attempts to register the host device 110 were made before cellular network connectivity was successfully obtained and with which IMSI the cellular network connectivity was successfully obtained.

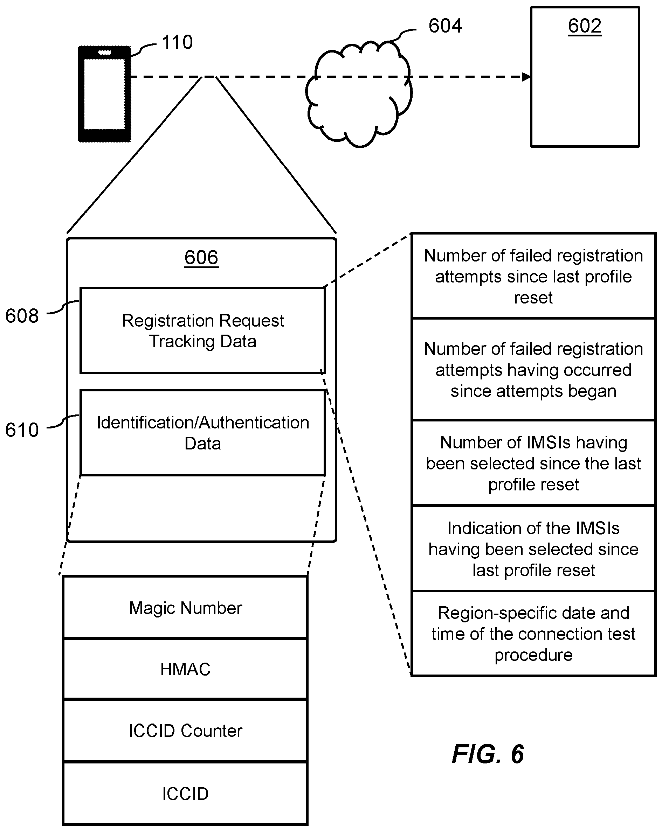

To this end, the data environment 318 and/or the SIS 302 may receive registration request tracking data used to keep track of the occurrence, frequency, and success rate of registration requests, among other things. In some examples, the host device 110 may be configured to perform a connection test procedure for testing whether the host device 110 is successfully attached to a cellular network for service. Turning to Figure 6, a part of the connection test procedure can be seen in which the host device 110 transmits a connection test message 606 to a test server 602. The connection test procedure may also include determining whether a response to the connection test message 606 is received by the host device 110. In the example shown, the connection test message 606 is transmitted over a network 604, such as the internet or some alternative communications network hardware.

The connection test message 606 includes registration request tracking data 608 which may be used to record, or otherwise determine, statistics relating to the attempts to register the host device 110 with the cellular network 300. In some cases, the connection test message 606 also includ920es data 610 that can be used to identify the device 110 to ensure that the test server 602 responds to legitimate test messages 606 from suitable host devices 110. The test server 602 may record this registration request tracking data 608 and provide it to the SIS 302 and/or the data environment 318.

By tracking statistics relating to the registration attempts from host devices 110, it becomes possible to identify when a quality of service for the device 110 degrades. In particular, an increase in the frequency of registration attempts performed by a device 110 may be readily identified. An increase in the frequency of registration attempts is generally undesirable as it may be associated with the device 110 undergoing longer or more frequent periods without having service provided by a cellular network 300. Other examples include being able to identify the frequency of failed registration attempts performed using certain IMSIs. Where the frequency of failed registration attempts procedures using a given IMSI increases, this may be an indication that the IMSI has been provided to a certain number of host devices such that it is being selected and used too frequently and causing a degradation in the service provided to certain host devices. This may indicate that the IMSI should be avoided, or deprioritised, in newly constructed and provisioned profile data structures 104.

Transmitting this request tracking data 608 in a test message 606 provides a channel for this data to be signalled into the cellular network 300, and/or to an MNO, or other service provider who manages the host device 110 and the profile data structure 104 provided therein. The MNO, or other type of service provider, may then use this tracking data 608 to modify or tune the production of profile data structures 104 that are provided to other devices. The service provider may also modify the profile data structure 104 stored in the host device 110 for example to update the IMSIs provided therein, to reduce the frequency with which the device 110 loses service from the cellular network 300, and/or to increase the speed with which the device 110 is able to reconnect to the cellular network 300 following a loss of service. This may be done by using RSP techniques and transmitting an updated profile data structure to the host device 110 that includes IMSIs that have been provided in fewer profiles than the IMSI previously comprised in the previous profile data structure. Where the tracking data 608 is indicative of attach requests using a given IMSI failing more frequently as compared to attach requests using other IMSIs, the MNO, or other type of service provider, may de-prioritise that given IMSI when producing profiles for other devices, such that it is less likely to be provided to other devices.

By transmitting the registration request tracking data 608 to the test server 602 it becomes possible to improve the service provided to host devices 110 by tuning the variation in IMSIs provided to certain host devices while aiming to keep the total number of IMSIs used low.

The registration request tracking data 608 may include a plurality of data elements in the form of byte sequences which are configured to represent specific information used to track the registration request procedures. The tracking data 608 may include an indication of a number of failed registration attempts having occurred since the host device 110 began the attempting to register with the cellular network 300. This indication may be included in the form of a 1-byte length counter. In some examples, the first registration request procedure may include re-attempting the registration, or attach.

The tracking data 608 may include an indication of the number of failed registration attempts having occurred since a previous reset of the profile, and/or a number of failed registration attempts since the device 110 was last successfully registered for service with the cellular network 300. The profile data structure 104 may be reset following certain events, such as on a re-boot of the device or when changing geographic location of the device 110. In this case, registration attempts may be performed repeatedly while attempting to attach to the cellular network 300. The registration request tracking data 608 may include a counter that counts the total number of failed registration attempts since the profile 104 was last reset.

The tracking data 608 may additionally, or alternatively, include an indication of a number of IMSIs having been selected since the previous reset of the profile 104. For example, the total number of IMSIs that have been selected and used by the device 110 in an attempt to register with the cellular network 300 may be counted and included in the tracking data 608. Where a large number of IMSIs have been selected since the last reset of the profile 104, this may be an indication that the IMSIs included in the profile 104 are concurrently in use by a large number of other host devices and as such are leading to a degradation in service provided to the host device 110 due to an increase in collision events.

The tracking data 608 may also include an indication of the IMSIs that have been selected since the previous reset of the profile 104. These IMSIs may include a first IMSI, selected during a first registration request procedure, also referred to as a registration attempt. Additionally, this may include the IMSIs selected in previous registration request procedures that have been performed since the last reset of the profile 104. In this way, it becomes possible to track which specific IMSIs are being used along with the statistics relating to their frequency of successfully or unsuccessfully being used in attach requests to the network 300. The indication of the IMSIs used may include a set of one or more index references which refer to record numbers of a database in which the IMSIs values are stored. Sending an index reference associated with each IMSI rather than the actual IMSI value may mitigate an increase in the size of the test message 606 compared to implementations where the IMSI values themselves are included in the test message 606, for example, while each IMSI value typically includes 14 to 15 digits, the index reference for an IMSI may be represented using one byte in the test message 606. Where there are N number of IMSIs that have been used since the last reset of the profile, there may be N bytes used to indicate the values of the IMSIs that have been selected since the last reset of the profile.

The tracking data 608 may also include a region-specific date and time of the connection test procedure, which is associated with the region, or country, in which the host device 110 is located. The date and time may be encoded in the tracking data 608 according to ETSI TS 102 223. Including date and time information in the tracking data 608 may enable trends in the operation of the registration request procedures, that are time variant, to be identified. For example, trends in the frequency and/or success and failure rate of registration request procedures may be temporally correlated, such that at certain times of day the frequency of registration request procedures may change. These frequencies may correlate to trends over different periods than a day, for example, over a week, a month, or over irregular time periods.

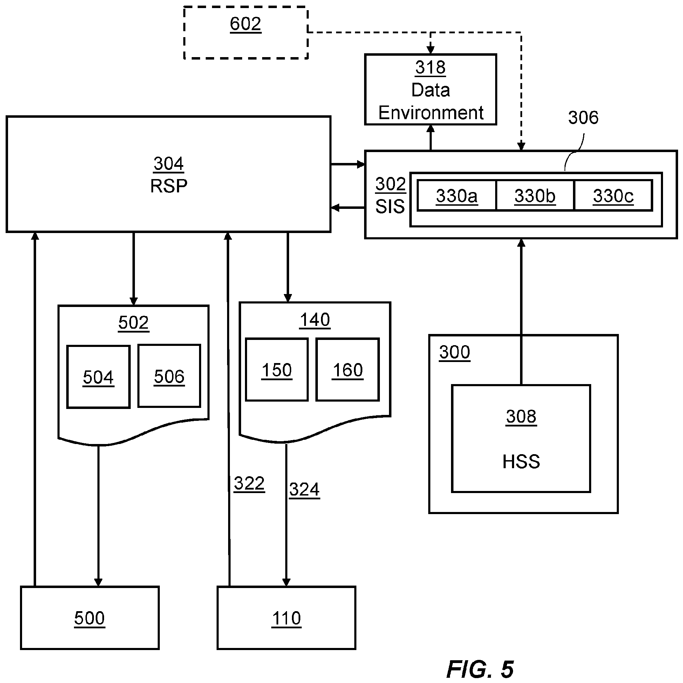

Returning to Figure 5, the data received by the data environment 318, for example from the test server 602 and/or from the SIS 302, may be used to generate metrics such as hourly collision rate between host devices attempting to use an IMSI comprised in the pool 306 of sets of two or more IMSIs 330a, 330b, 330c included in the SIS 302; countries in which IMSIs from the pool 306 of sets of two or more IMSIs 330a, 330b, 330c included in the SIS 302 are used; hourly total of uses of each IMSI comprised in the pool 306 of sets of two or more IMSIs 330a, 330b, 330c included in the SIS 302; average duration of the registration to a cellular network performed using an IMSI comprised in the pool 306 of sets of two or more IMSIs 330a, 330b, 330c included in the SIS 302; registration attempts and registration failures performed using an IMSI comprised in the pool 306 of sets of two or more IMSIs 330a, 330b, 330c included in the SIS 302; and average time for a host device to recover from a registration failure performed using an IMSI comprised in the pool of sets of two or more IMSIs included in SIS the 302. The metrics generated by the data environment 318 may be used to optimize the selection operation performed by the SIS 302 to select a set of two or more IMSIs 150 and a set of authentication data 160 associated with the set of IMSIs to provide to a host device.

Alternatively to performing the selection operation by prioritizing batched sets of IMSIs 330a, 330b, 330c which include shared IMSI which have not been used, or have been least used, the SIS 302 may select a batched set of two or more IMSIs at random from a group of batched sets comprising the least used shared IMSIs.

As described above, the selection operation may include either prioritizing batched set of IMSIs 330a, 330b, 330c that include shared IMSIs based on the use of these shared IMSIs or selecting batched sets of IMSIs at random. Both methods are effective in diminishing the collision probability when using one of the shared IMSIs to register with a cellular network.

As described above, the use of an IMSI to register a host device 110 to a cellular network 300, 350 may cause the provision of a further profile data structure to a further host device to be modified in order reduce a probability of a registration collision between the host device 110 and a further host device. Figure 5 is a simplified schematic diagram illustrating this according to examples. In the example shown, a first host device 110 performs a method 200 as described above in relation to Figures 1 to 3. The method 200 includes downloading a first profile data structure 140 comprising a set of two or more IMSIs 150, which is selected from a pool 306 of batched sets of IMSIs 330a, 330b, 330c, and authentication data 160. The first host device 110 may then select a shared IMSI and attempt to register with a cellular network, the cellular network either being the home cellular network 300 shown in Figure 5, or a different cellular network, such as a visited cellular network 350 in a country where the host device 110 is located. If the registration of the first host device 110 is successfully processed, the first host device 110 connects to the cellular network 300, 350 using the selected shared IMSI. Following the registration of the first host device 110, the SIS 302 is notified by the HSS 308 of the use by the first host device 110 of the shared IMSI. The geographic location of the first host device 110 using the shared IMSI may be determined in any of a plurality of ways. In some examples, the SIS 302 may determine the geographic location of the first host device 110 from a Calling Global Title which is provided to the SIS 302 by the HSS 308. In this way, the SIS 302 has a record of which IMSIs comprised in the pool 306 of sets of IMSIs included in the SIS 302 are being used and in which geographic locations. The SIS 302 notifies the data environment 318 of the uses of the IMSIs comprised in the pool 306 of sets of IMSIs. In this way the data environment 318 has a record of which IMSIs comprised in the pool 306 of sets of IMSIs are being used and in which geographic locations. Simultaneously, or shortly thereafter, a second host device 500 may also implement a method 200 for obtaining cellular network connectivity. For example, the second host device 500 can perform a first process to download a second profile data structure 502 comprising a set of two or more IMSIs 504 and authentication data 506 associated with the set of IMSIs.

As described above, if a selected shared IMSI is in use by the first host device 110 and a second host device 500 tries to use the same shared IMSI to attempt to register with a cellular network, this attempt may fail. Each IMSI is unique to a registration between one host device and the cellular network and so no two host devices can simultaneously use the same IMSI, although if the first host device 110 were to stop using the selected shared IMSI then the second host device 500 could use the selected shared IMSI.

In the present example, the SIS 302 may be configured to mitigate a probability that the first host device 110 and the second host device 500 will attempt to use the same shared IMSI at the same time to register with a cellular network. When performing the selection operation to select a set of two or more IMSIs to be provided to the second host device 502, the SIS 302 may prioritize a batched set of two or more IMSIs 330a, 330b, 330c based on the number of times that shared IMSIs comprised in the pool 306 of sets of two or more IMSIs 330a, 330b, 330c have been used. For example, the SIS 302 may be notified that the first host device 110 as recently registered with a cellular network using a given shared IMSI and when selecting a set of two or more IMSIs 330a, 330b, 330c to be provided to the second host device 502, the SIS 302 may prioritize sets of IMSIs 330a, 330b, 330c which do not include the given shared IMSI used by the first host device 110.

It will be appreciated that with a limited set of shared IMSIs and over a long period of time, all, or almost all, of the shared IMSIs may be used. As such, the prioritization may be time dependent such that different IMSIs are prioritized at different points in time. The SIS 302 may, for example, order the sets of two or more IMSIs 330a, 330b, 330c such that sets of IMSIs comprising shared IMSIs which have been least frequently used, may appear near the top of a list from which batched sets 330a, 330b, 330c are selected. The list may be updated as data is received from the HSS 308 notifying the SIS 302 of uses of shared IMSIs. The SIS 302 may additionally, or alternatively, prioritize shared IMSIs that were not used in the geographic location of the second host device 500 requesting the second profile data structure 502. If there are no shared IMSIs that were not used in the geographic location of the second host device 500 requesting the second profile data structure 502, the SIS 302 may prioritize shared IMSIs based on the least number of times that the IMSIs have been used in the geographic location of the second host device 500 requesting the second profile data structure 502 to register with a cellular network.

In this way it becomes possible to reduce the likelihood that the second profile data structure 502 to be provided to the second host device 500 comprises a set of two or more IMSIs 504 that includes the shared IMSI in use, or recently used, by the first host device 110 in the same geographic location over a configurable period of time. Which in turn reduces the probability that a registration collision event will occur when the second host device 502 attempts to register with a cellular network according to the second process of the method 200 described above in relation to Figure 2.

If there are no shared IMSIs that were not used in the geographic location of the second host device 500 requesting the second profile data structure 502, the set of two or more IMSIs 504 which are selected by the SIS 302 from the batched sets of two or more IMSIs 330a, 330b, 330c for the second profile data structure 502 may include the IMSIs which have been the least used in that geographic location over a configurable period of time. Following the selection of the set of two or more IMSIs 504 by the SIS 302 and the transmittal of this set 504 to the RSP platform 304, the RSP 304 transmits a second profile data structure 502 comprising the set of two or more IMSIs 504 and authentication data 506 associated with the set of IMSIs for receipt by the host device 500. In this way, the second host device 500 is less likely to select a shared IMSI which, when used to register with a cellular network 300, 350, would cause a registration collision.

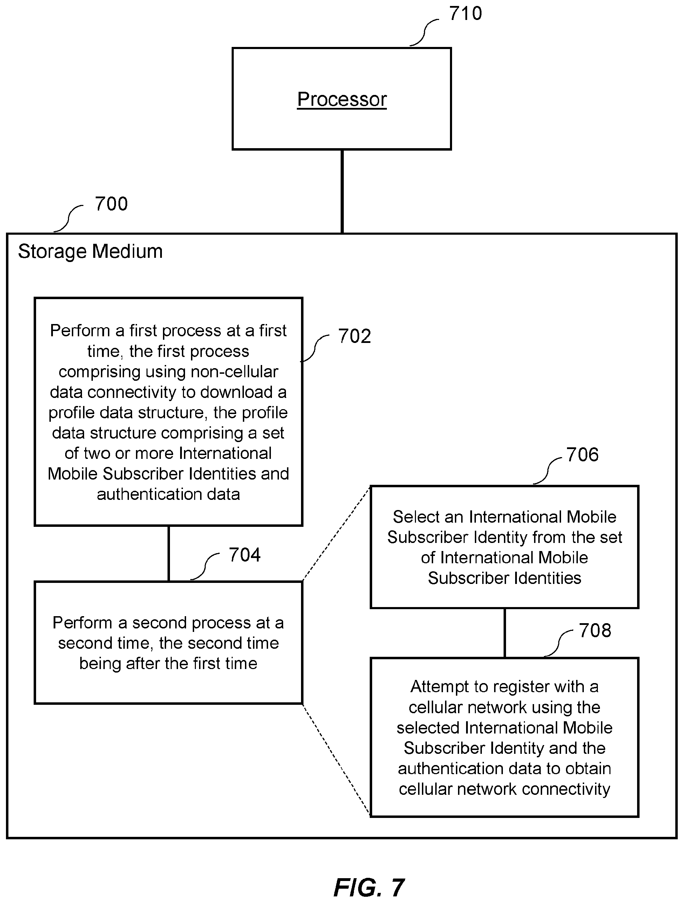

Figure 7 illustrates a non-transitory computer-readable storage medium 700 comprising computer executable instructions 702 to 708, which when executed by at least processor 710 cause the at least one processor 710 to perform a method 200 for a host device 110 as described above according to the examples shown in Figures 1 to 3.

Figure 8 shows a computing system 800 comprising at least one processor 802 and storage 804 storing instructions 806, 808 for the execution of a method 400 for enabling a host device to obtain cellular network connectivity described above with respect to Figures 3 to 5. The computing system 800 may be implemented as one or more computing devices, including any suitable combination of hardware and software, including computing devices distributed over a geographic area or co-located. The computing system 800 may comprise suitable communications technology for communicating with one or more host devices, such as being able to communicate via wireless cellular frequencies. The computing system 800 may also comprise one or more interfaces for communicating with other networks and/or remote servers, for example, the internet. In some examples, the network elements described above in relation to Figures 3 to 5 may be implemented by either one or many computing devices.

Figure 9 shows a non-transitory computer-readable storage medium 900 comprising computer-executable instructions 902 and 904 which, when executed by a processor 906, cause the processor to perform a method 400 as described above in relation to Figures 3 to 5.

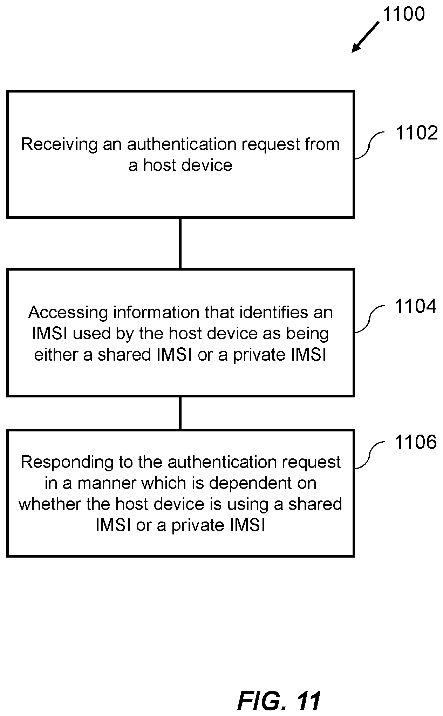

In some examples, the home server 308, such as an HSS, may react differently to registration attempts using shared IMSIs and registration attempts using private IMSIs. An example of a home server 308, which is operable with the examples described above according to Figures 1 to 8 will now be described with reference to Figures 10 and 11. Figure 10 illustrates a home server 308, or network element, which may be implemented as any one or more of an HSS, and HLR, an AuC, or a combination thereof. The home server 308 comprises storage 1002 and one or more processors 1004. The storage 1002 comprises computer-executable instructions which when executed by a processor(s) 1004 cause the processor to perform a method 1100 illustrated in Figure 11. The method 1100 includes, at block 1102, receiving an authentication request from a host device 110 attempting to register with a cellular network. The host device 110 may be using either a shared IMSI or a private IMSI which are provided to the host device 110 in a profile data structure 140 according to the method 400 described in relation to Figure 3 and 4.

At block 1104 the home server 308 accesses information that identifies an IMSI used by the host device 110 as being either a shared IMSI or a private IMSI. For example, a Provisioning System 316 may communicate with the home server 308 over an interface to provide information which identifies an IMSI used by the host device 110 as being either a private IMSI or a shared IMSI.

At block 1106 the home server 308 responds to the authentication request in a manner which is dependent on whether the host device is using a shared IMSI or a private IMSI.

In the example shown in Figure 10, a first host device 110 comprises a secure module 100 which includes a profile data structure 140 comprising a set of two or more IMSIs 150 and authentication data 160 associated with the set of IMSIs, wherein the set of two or more IMSIs 150 comprises at least one shared IMSI and one private IMSI. The second process according to the method 200 described above with respect to Figure 2 is performed and a shared IMSI is selected. The first host device 110 sends an authentication request 1020a to the home server 308 using the selected shared IMSI, wherein the authentication request may be in the form of an SAI message. The host device 110 may either be located within the region of the home cellular network 300 or may be in a visited network 350. The home server 308 performs a check to determine if the shared IMSI is in an active state in either the same cellular network or a different cellular network to the cellular network in which the host device 110 is located. The example shown in Figure 10 is simplified such that it appears that the host device 110 communicates directly with the home server 308, however, it will be appreciated that the request 1020a may be received through other network elements. If the shared IMSI is not in active state, responding 1106 to the authentication request 1020a includes the home server 308 sending a response 1020b to the SAI message accepting the registration of the first host device 110. The shared IMSI used by the first host device 110 is marked as active and if the host device 110 is in a visited cellular network, then the host device 110 is also marked as active in the VLR of the visited network 350.

Simultaneously, or shortly thereafter, when the selected shared IMSI is still being used by the first host device 110, a second host device 500 comprising a secure module 508, which includes a profile data structure 502 which may share one or more shared IMSIs with the profile data structure 140 of the first host device 110, may select an IMSI and send an authentication request 1022a to the home server 308.

The home server 308 accesses information that identifies an IMSI used by the second host device 500 as being either a shared IMSI or a private IMSI. If the IMSI used by the second host device 500 is a private IMSI, responding 1106 to the authentication request 1022a from the second host device 500 includes authenticating the second host device 500 and sending a response 1022b to the SAI message accepting the registration of the second host device 500.

If the IMSI used by the second host device 500 is a shared IMSI then the home server 308 performs a check to determine if the said shared IMSI is in active state. If the shared IMSI used by the second host device 500 is the same shared IMSI used by the first host device 110, and this shared IMSI is in an active state in a cellular network, the home server 308 sends a response 1022b to the SAI message 1022a refusing the registration of the second host device 500. In this way, when a shared IMSI is registered and simultaneously, or shortly thereafter, there is a registration attempt using the same shared IMSI, the home server 308 responds to the SAI message from the second host device 500 with a refusal to register. This prevents the first host device 110 that was already registered from losing service and the second host device 500 receives a refusal to register message. The second host device 500 may then select a different IMSI and attempt to register with the cellular network using that IMSI.

If the IMSI used by the second host device 500 in the authentication request 1022a is a shared IMSI but it is not in an active state, then the home server 308 may send a response 1022b accepting the registration of the second host device 500.

The home server 308 may also be configured to periodically process registration information associated with host devices which are registered with a cellular network. For example, the home server 308 may process a list of registered host devices and may deregister host devices which are no longer to be registered. In some cases, the home server 308 may deregister host devices which have registered using a shared IMSI after a predetermined period of time after the respective host device 110 was originally registered. In other examples, a host device using a shared IMSI may be deregistered after a predetermined period of time has lapsed since the host device 110 was actively using the cellular network connectivity obtained using the shared IMSI. The predetermined period of time may be static and set in the home server 308. Alternatively, the predetermined period of time may be dynamically configured and changed based on metrics collected by the data environment 318. To this end, the SIS 302 may communicate with the home server 308 in order to update the predetermined period of time based on which host devices are deregistered.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer-implemented method for a host device, the computer-implemented method comprising:
performing a first process at a first time, the first process comprising using non-cellular data connectivity to transmit a request to download a profile data structure, the profile data structure comprising a set of two or more International Mobile Subscriber Identities, IMSIs, and authentication data associated with the set of two or more IMSIs; and
performing a second process at a second time, the second time being after the first time, the second process comprising:
selecting an IMSI from the set of two or more IMSIs; and
attempting to register with a cellular network using the selected IMSI and the authentication data to obtain cellular network connectivity,
wherein the set of two or more IMSIs comprises one or more shared IMSIs and one or more private IMSIs, the one or more shared IMSIs being included in a plurality of profile data structures that are available to one or more further host devices and the one or more private IMSIs being uniquely included in the profile data structure downloaded to the host device,
at least one IMSI in the set of two or more IMSIs is a region-independent associated with region-independence indication data and at least one IMSI in the set of two or more IMSIs is a region-dependent IMSI associated with regional indication data, and
selecting of either a private IMSI or a shared IMSI from the set of two or more IMSIs is provided in accordance with prioritization specified in the host device and/or in the profile data structure.

2. A computer-implemented method according to claim 1, wherein the one or more shared IMSIs comprise at least one region-independent IMSI associated with region-independence indication data and at least one region-dependent IMSI associated with regional indication data and/or wherein the one or more private IMSIs comprise at least one region-dependent IMSI associated with regional indication data and at least one region-independent IMSI associated with region-independence indication data.

3. A computer-implemented method according to any preceding claim, wherein the second process comprises activating the profile data structure to select a private or a shared IMSI from the set of IMSIs.

4. A computer-implemented method according any preceding claim, wherein the second process comprises determining a geographic location of the host device at the second time, and wherein if the region dependent IMSIs are not associated with the geographic location of the host device, selecting an IMSI from the set of IMSIs includes selecting a region independent IMSI associated with region-independence indication data to register with a cellular network.

5. A computer-implemented method according to any preceding claim, wherein selecting an IMSI from the set of IMSIs includes prioritizing a private IMSI associated with the geographic location of the host device at the second time.

6. A computer-implemented method according to any preceding claim, wherein the second process comprises:
if the attempting to register with the cellular network using the selected IMSI is unsuccessful:
selecting a further IMSI from the set of IMSIs to be the selected IMSI; and
attempting to register with the cellular network using the selected further IMSI; and/or
if the attempting to register with the cellular network using the selected IMSI is successful and no cellular network connectivity is provided to the host device:
selecting a further IMSI from the set of IMSIs to be the selected IMSI; and
attempting to register with the cellular network using the selected further IMSI.

7. A computer-implemented method according to any preceding claim, wherein:
a single set of authentication data is associated with each IMSI of the set of IMSIs; or
different subsets of IMSIs in the set of IMSIs are associated with different sets of authentication data.

8. A computer-implemented method according to any preceding claim, wherein the second process is triggered independently of the first process.

9. A host device comprising at least one processor and storage comprising computer-executable instructions which, when executed by the at least one processor, cause the at least one processor to perform a computer-implemented method according to any of claims 1 to 8.

10. A computer-implemented method for enabling a host device to obtain cellular network connectivity, the method provided by one or more operatively connected network elements and comprising:
receiving a request to provide a profile data structure to a host device;
generating the profile data structure comprising a first set of two or more International Mobile Subscriber Identities, IMSIs, and authentication data associated therewith; and
transmitting the profile data structure for receipt by the host device,
wherein:
the first set of two or more IMSIs is selectable from a second set of three or more IMSIs;
the second set of IMSIs comprises one or more shared IMSIs and one or more private IMSIs, the one or more shared IMSIs being included in a plurality of profile data structures that are available to one or more further host device and the one or more private IMSIs being uniquely included in the profile data structure downloaded to the host device; and
the second set of IMSIs comprises at least one region independent IMSI associated with region-independence indication data and at least one region dependent IMSI associated with regional indication data, and
wherein the generating the profile data structure comprises:
batching the second set of three or more IMSIs into a plurality of batched sets of two or more IMSIs, each batched set of two or more IMSIs comprising at least one shared IMSI and at least one private IMSI; and
selecting the first set of two or more IMSIs from the batched sets of two or more IMSIs.

11. A computer-implemented method according to claim 10, the method comprising receiving data indicating a number of times that IMSIs in the second set of IMSIs have been used by other host devices, and wherein the first set of IMSIs are selected based on the data indicating the number of times that IMSIs in the second set of IMSIs have been used by other host devices.

12. A computer-implemented method according to claim 11, wherein selecting the first set of IMSIs based on the data indicating the number of times that IMSIs in the second set of IMSIs have been used by other host devices comprises prioritising IMSIs of the second set of IMSIs which are associated with fewer uses than other IMSIs of the second set of IMSIs and/or prioritising IMSIs of the second set of IMSIs which are associated with fewer uses in a geographic location of the host device than other IMSIs of the second set of IMSIs.

13. A computer-implement method according to claim 12, wherein prioritising IMSIs of the second set of IMSIs is time dependent such that different IMSIs are prioritized at different points in time.

14. A computer system communicatively coupled to a cellular network, the computer system comprising at least one processor and storage comprising computer- executable instructions which, when executed by the at least one processor, cause the computer system to perform a method according to any of claims 10 to 13.

15. A non-transitory computer-readable storage medium comprising computer-executable instructions which, when executed by at least one processor, cause the processor to perform a method according to any of claims 1 to 8 or 10 to 13.

## Patentansprüche

1. Computerimplementiertes Verfahren für ein Hostgerät, das computerimplementierte Verfahren umfassend:
Ausführen eines ersten Prozesses zu einem ersten Zeitpunkt, wobei der erste Prozess die Verwendung einer nicht-zellularen Datenkonnektivität zum Übertragen einer Anforderung zum Herunterladen einer Profildatenstruktur umfasst, wobei die Profildatenstruktur einen Satz aus zwei oder mehr internationalen Mobilfunkteilnehmeridentitäten (International Mobile Subscriber Identities, IMSIs) und mit dem Satz aus zwei oder mehr IMSIs verknüpften Authentifizierungsdaten umfasst; und
Ausführen eines zweiten Prozesses zu einem zweiten Zeitpunkt, wobei der zweite Zeitpunkt nach dem ersten Zeitpunkt liegt, wobei der zweite Prozess umfasst:
Auswählen einer IMSI aus dem Satz von zwei oder mehr IMSIs; und
Versuchen, sich mit der ausgewählten IMSI und den Authentifizierungsdaten bei einem Mobilfunknetz anzumelden, um eine Mobilfunkverbindung herzustellen,
wobei der Satz aus zwei oder mehr IMSIs eine oder mehrere gemeinsam genutzte IMSIs und eine oder mehrere private IMSIs umfasst, wobei die eine oder mehreren gemeinsam genutzten IMSIs in einer Vielzahl von Profildatenstrukturen enthalten sind, die einem oder mehreren weiteren Hostgeräten zur Verfügung stehen, und die eine oder mehreren privaten IMSIs eindeutig in der auf das Hostgerät heruntergeladenen Profildatenstruktur enthalten sind,
mindestens eine IMSI in dem Satz aus zwei oder mehr IMSIs eine regionsunabhängige IMSI ist, die mit regionsunabhängigen Anzeigedaten verknüpft ist, und mindestens eine IMSI in dem Satz aus zwei oder mehr IMSIs eine regionsabhängige IMSI ist, die mit regionalen Anzeigedaten verknüpft ist, und
das Auswählen von entweder einer privaten IMSI oder einer gemeinsam genutzten IMSI aus dem Satz von zwei oder mehr IMSIs gemäß der im Hostgerät und/oder in der Profildatenstruktur angegebenen Priorisierung erfolgt.

2. Computerimplementiertes Verfahren nach Anspruch 1, wobei die eine oder mehreren gemeinsam genutzten IMSIs mindestens eine regionsunabhängige IMSI umfassen, die mit Angabedaten zur Regionsunabhängigkeit verknüpft ist, und mindestens eine regionsabhängige IMSI, die mit regionalen Angabedaten verknüpft ist, und/oder wobei die eine oder mehreren privaten IMSIs mindestens eine regionsabhängige IMSI umfassen, die mit regionalen Angabedaten verknüpft ist, und mindestens eine regionsunabhängige IMSI, die mit Angabedaten zur Regionsunabhängigkeit verknüpft ist.

3. Computerimplementiertes Verfahren nach einem der vorstehenden Ansprüche, wobei der zweite Prozess das Aktivieren der Profildatenstruktur umfasst, um eine private oder gemeinsam genutzte IMSI aus dem Satz von IMSIs auszuwählen.

4. Computerimplementiertes Verfahren nach einem der vorstehenden Ansprüche, wobei der zweite Prozess das Bestimmen eines geografischen Standorts des Hostgeräts zum zweiten Zeitpunkt umfasst, und wobei, wenn die regionsabhängigen IMSIs nicht mit dem geografischen Standort des Hostgeräts verknüpft sind, das Auswählen einer IMSI aus dem Satz von IMSIs das Auswählen einer regionsunabhängigen IMSI umfasst, die mit Angabedaten zur Regionsunabhängigkeit verknüpft ist, um sich bei einem Mobilfunknetz anzumelden.

5. Computerimplementiertes Verfahren nach einem der vorstehenden Ansprüche, wobei das Auswählen einer IMSI aus dem Satz von IMSIs das Priorisieren einer privaten IMSI umfasst, die mit dem geografischen Standort des Hostgeräts zum zweiten Zeitpunkt verknüpft ist.

6. Computerimplementiertes Verfahren nach einem der vorstehenden Ansprüche, wobei der zweite Prozess umfasst:
wenn der Versuch, sich mit der gewählten IMSI im Mobilfunknetz anzumelden, fehlschlägt:
Auswählen einer weiteren IMSI aus dem Satz der IMSIs als ausgewählte IMSI; und Versuchen, sich mit der ausgewählten weiteren IMSI beim Mobilfunknetz anzumelden; und/oder
wenn der Versuch, sich mit der ausgewählten IMSI beim Mobilfunknetz anzumelden, erfolgreich ist und dem Hostgerät keine Mobilfunkverbindung zur Verfügung gestellt wird:
Auswählen einer weiteren IMSI aus dem Satz der IMSIs als ausgewählte IMSI; und Versuchen, sich mit der ausgewählten weiteren IMSI beim Mobilfunknetz anzumelden.

7. Computerimplementiertes Verfahren nach einem der vorstehenden Ansprüche, wobei:
jeder IMSI des Satzes von IMSIs ein einzelner Satz von Authentifizierungsdaten zugeordnet ist; oder
verschiedene Teilsätze von IMSIs im Satz von IMSIs mit unterschiedlichen Sätzen von Authentifizierungsdaten verknüpft sind.

8. Computerimplementiertes Verfahren nach einem der vorstehenden Ansprüche, wobei der zweite Prozess unabhängig von dem ersten Prozess ausgelöst wird.

9. Hostgerät, umfassend mindestens einen Prozessor und einen Speicher, der computerausführbare Anweisungen enthält, die, wenn sie von dem mindestens einen Prozessor ausgeführt werden, den mindestens einen Prozessor veranlassen, ein computerimplementiertes Verfahren gemäß einem der Ansprüche 1 bis 8 auszuführen.

10. Computerimplementiertes Verfahren, das es einem Hostgerät ermöglicht, eine Mobilfunknetzkonnektivität herzustellen, wobei das Verfahren von einem oder mehreren operativ verbundenen Netzwerkelementen bereitgestellt wird und umfasst:
Empfangen einer Anforderung zum Bereitstellen einer Profildatenstruktur für ein Hostgerät;
Generieren der Profildatenstruktur, die einen ersten Satz von zwei oder mehr International Mobile Subscriber Identities (IMSIs) und damit verbundenen Authentifizierungsdaten umfasst; und
Übertragen der Profildatenstruktur zum Empfang durch das Hostgerät, wobei:
der erste Satz aus zwei oder mehr IMSIs aus einem zweiten Satz aus drei oder mehr IMSIs auswählbar ist;
der zweite Satz von IMSIs eine oder mehrere gemeinsam genutzte IMSIs und eine oder mehrere private IMSIs umfasst, wobei die eine oder mehreren gemeinsam genutzten IMSIs in einer Vielzahl von Profildatenstrukturen enthalten sind, die einem oder mehreren weiteren Hostgeräten zur Verfügung stehen, und die eine oder mehreren privaten IMSIs eindeutig in der auf das Hostgerät heruntergeladenen Profildatenstruktur enthalten sind; und
der zweite Satz von IMSIs mindestens eine regionsunabhängige IMSI, die mit regionsunabhängigen Anzeigedaten verknüpft ist, und mindestens eine regionsabhängige IMSI, die mit regionalen Anzeigedaten verknüpft ist, umfasst, und wobei das Generieren der Profildatenstruktur umfasst:
Bündeln des zweiten Satzes aus drei oder mehr IMSIs in eine Vielzahl von Bündelsätzen aus zwei oder mehr IMSIs, wobei jeder Bündelsatz aus zwei oder mehr IMSIs mindestens eine gemeinsam genutzte IMSI und mindestens eine private IMSI umfasst; und
Auswählen des ersten Satzes aus zwei oder mehr IMSIs aus den gebündelten Sätzen aus zwei oder mehr IMSIs.

11. Computerimplementiertes Verfahren nach Anspruch 10, wobei das Verfahren das Empfangen von Daten umfasst, die angeben, wie oft IMSIs im zweiten Satz von IMSIs von anderen Hostgeräten verwendet wurden, und wobei der erste Satz von IMSIs basierend auf den Daten ausgewählt wird, die angeben, wie oft IMSIs im zweiten Satz von IMSIs von anderen Hostgeräten verwendet wurden.

12. Computerimplementiertes Verfahren nach Anspruch 11, wobei das Auswählen des ersten Satzes von IMSIs auf Grundlage der Daten, die angeben, wie oft IMSIs im zweiten Satz von IMSIs durch andere Hostgeräte verwendet wurden, das Priorisieren von IMSIs des zweiten Satzes von IMSIs umfasst, die mit weniger Verwendungen verknüpft sind als andere IMSIs des zweiten Satzes von IMSIs, und/oder das Priorisieren von IMSIs des zweiten Satzes von IMSIs, die mit weniger Verwendungen an einem geografischen Standort des Hostgeräts verknüpft sind als andere IMSIs des zweiten Satzes von IMSIs.

13. Computerimplementiertes Verfahren nach Anspruch 12, wobei die Priorisierung der IMSIs des zweiten Satzes von IMSIs derart zeitabhängig ist, dass unterschiedliche IMSIs zu unterschiedlichen Zeitpunkten priorisiert werden.

14. Computersystem, das kommunikativ mit einem Mobilfunknetz verbunden ist, wobei das Computersystem mindestens einen Prozessor und einen Speicher mit computerausführbaren Anweisungen umfasst, die, wenn sie von dem mindestens einen Prozessor ausgeführt werden, das Computersystem veranlassen, ein Verfahren gemäß einem der Ansprüche 10 bis 13 auszuführen.

15. Nicht-transitorisches computerlesbares Speichermedium, das computerausführbare Anweisungen umfasst, die, wenn sie von mindestens einem Prozessor ausgeführt werden, den Prozessor veranlassen, ein Verfahren gemäß einem der Ansprüche 1 bis 8 oder 10 bis 13 auszuführen.

## Revendications

1. Procédé mis en œuvre par ordinateur pour un dispositif hôte, le procédé mis en œuvre par ordinateur comprenant :
la réalisation d'un premier processus à un premier instant, le premier processus comprenant l'utilisation d'une connectivité de données non cellulaire pour transmettre une demande de téléchargement d'une structure de données de profil, la structure de données de profil comprenant un ensemble d'au moins deux identités internationales d'abonné mobile, IMSI, et des données d'authentification associées à l'ensemble d'au moins deux IMSI ; et
la réalisation d'un second processus à un second instant, le second instant étant postérieur au premier instant, le second processus comprenant :
la sélection d'une IMSI à partir de l'ensemble d'au moins deux IMSI ; et
la tentative de s'enregistrer auprès d'un réseau cellulaire à l'aide de l'IMSI sélectionnée et des données d'authentification pour obtenir une connectivité de réseau cellulaire,
dans lequel l'ensemble d'au moins deux IMSI comprend une ou plusieurs IMSI partagées et une ou plusieurs IMSI privées, la ou les IMSI partagées étant incluses dans une pluralité de structures de données de profil qui sont disponibles pour un ou plusieurs dispositifs hôtes supplémentaires et la ou les IMSI privées étant incluses de manière unique dans la structure de données de profil téléchargée sur le dispositif hôte,
au moins une IMSI dans l'ensemble d'au moins deux IMSI est une IMSI indépendante de la région associée à des données d'indication d'indépendance de la région et au moins une IMSI dans l'ensemble d'au moins deux IMSI est une IMSI dépendante de la région associée à des données d'indication régionales, et
la sélection d'une IMSI privée ou d'une IMSI partagée à partir de l'ensemble d'au moins deux IMSI est assurée conformément à une priorisation spécifiée dans le dispositif hôte et/ou dans la structure de données de profil.

2. Procédé mis en œuvre par ordinateur selon la revendication 1, dans lequel la ou les IMSI partagées comprennent au moins une IMSI indépendante de la région associée aux données d'indication d'indépendance de la région et au moins une IMSI dépendante de la région associée aux données d'indication de la région et/ou dans lequel la ou les IMSI privées comprennent au moins une IMSI dépendante de la région associée aux données d'indication de la région et au moins une IMSI indépendante de la région associée aux données d'indication d'indépendance de la région.

3. Procédé mis en œuvre par ordinateur selon l'une quelconque revendication précédente, dans lequel le second processus comprend l'activation de la structure de données de profil pour sélectionner une IMSI privée ou partagée à partir de l'ensemble d'IMSI.

4. Procédé mis en œuvre par ordinateur selon l'une quelconque revendication précédente, dans lequel le second processus comprend la détermination d'un emplacement géographique du dispositif hôte au second instant, et dans lequel, si les IMSI dépendantes de la région ne sont pas associées à l'emplacement géographique du dispositif hôte, la sélection d'une IMSI à partir de l'ensemble d'IMSI comporte la sélection d'une IMSI indépendante de la région associée à des données d'indication d'indépendance de la région pour s'enregistrer auprès d'un réseau cellulaire.

5. Procédé mis en œuvre par ordinateur selon l'une quelconque revendication précédente, dans lequel la sélection d'une IMSI à partir de l'ensemble d'IMSI comporte la priorisation d'une IMSI privée associée à l'emplacement géographique du dispositif hôte au second instant.

6. Procédé mis en œuvre par ordinateur selon l'une quelconque revendication précédente, dans lequel le second processus comprend :
si la tentative de s'enregistrer auprès du réseau cellulaire à l'aide de l'IMSI sélectionnée échoue :
la sélection d'une IMSI supplémentaire à partir de l'ensemble d'IMSI pour être l'IMSI sélectionnée ; et la tentative de s'enregistrer auprès du réseau cellulaire à l'aide de l'IMSI supplémentaire sélectionnée ; et/ou
si la tentative de s'enregistrer auprès du réseau cellulaire à l'aide de l'IMSI sélectionnée réussit et qu'aucune connectivité au réseau cellulaire n'est fournie au dispositif hôte :
la sélection d'une IMSI supplémentaire à partir de l'ensemble d'IMSI pour être l'IMSI sélectionnée ; et la tentative de s'enregistrer auprès du réseau cellulaire à l'aide de l'IMSI supplémentaire sélectionnée.

7. Procédé mis en œuvre par ordinateur selon l'une quelconque revendication précédente, dans lequel :
un seul ensemble de données d'authentification est associé à chaque IMSI de l'ensemble d'IMSI ; ou
différents sous-ensembles d'IMSI dans l'ensemble d'IMSI sont associés à différents ensembles de données d'authentification.

8. Procédé mis en œuvre par ordinateur selon l'une quelconque revendication précédente, dans lequel le second processus est déclenché indépendamment du premier processus.

9. Dispositif hôte comprenant au moins un processeur et un stockage comprenant des instructions exécutables par ordinateur qui, lorsqu'elles sont exécutées par l'au moins un processeur, amènent l'au moins un processeur à réaliser un procédé mis en œuvre par ordinateur selon l'une quelconque des revendications 1 à 8.

10. Procédé mis en œuvre par ordinateur destiné à permettre à un dispositif hôte d'obtenir une connectivité de réseau cellulaire, le procédé étant fourni par un ou plusieurs éléments de réseau connectés de manière opérationnelle et comprenant :
la réception d'une demande pour fournir une structure de données de profil à un dispositif hôte ;
la génération de la structure de données de profil comprenant un premier ensemble d'au moins deux identités internationales d'abonné mobile, IMSI, et des données d'authentification associées à celui-ci ; et
la transmission de la structure de données de profil pour réception par le dispositif hôte, dans lequel :
le premier ensemble d'au moins deux IMSI peut être sélectionné à partir d'un second ensemble d'au moins trois IMSI ;
le second ensemble d'IMSI comprend une ou plusieurs IMSI partagées et une ou plusieurs IMSI privées, la ou les IMSI partagées étant incluses dans une pluralité de structures de données de profil qui sont disponibles pour un ou plusieurs dispositifs hôtes supplémentaires et la ou les IMSI privées étant incluses de manière unique dans la structure de données de profil téléchargée sur le dispositif hôte ; et
le second ensemble d'IMSI comprend au moins une IMSI indépendante de la région associée à des données d'indication d'indépendance de la région et au moins une IMSI dépendante de la région associée à des données d'indication régionale, et dans lequel la génération de la structure de données de profil comprend :
le groupement du second ensemble d'au moins trois IMSI en une pluralité d'ensembles groupés d'au moins deux IMSI, chaque ensemble groupé d'au moins deux IMSI comprenant au moins une IMSI partagée et au moins une IMSI privée ; et
la sélection du premier ensemble d'au moins deux IMSI à partir des ensembles groupés d'au moins deux IMSI.

11. Procédé mis en œuvre par ordinateur selon la revendication 10, le procédé comprenant la réception de données indiquant un nombre de fois où des IMSI dans le second ensemble d'IMSI ont été utilisées par d'autres dispositifs hôtes, et dans lequel le premier ensemble d'IMSI est sélectionné sur la base des données indiquant le nombre de fois où les IMSI dans le second ensemble d'IMSI ont été utilisées par d'autres dispositifs hôtes.

12. Procédé mis en œuvre par ordinateur selon la revendication 11, dans lequel la sélection du premier ensemble d'IMSI sur la base des données indiquant le nombre de fois où les IMSI dans le second ensemble d'IMSI ont été utilisées par d'autres dispositifs hôtes comprend la priorisation des IMSI du second ensemble d'IMSI qui sont associées à moins d'utilisations que d'autres IMSI du second ensemble d'IMSI et/ou la priorisation des IMSI du second ensemble d'IMSI qui sont associées à moins d'utilisations dans un emplacement géographique du dispositif hôte que d'autres IMSI du second ensemble d'IMSI.

13. Procédé mis en œuvre par ordinateur selon la revendication 12, dans lequel la priorisation des IMSI du second ensemble d'IMSI dépend du temps, de telle sorte que différentes IMSI sont priorisées à différents moments dans le temps.

14. Système informatique couplé en communication à un réseau cellulaire, le système informatique comprenant au moins un processeur et un stockage comprenant des instructions exécutables par ordinateur qui, lorsqu'elles sont exécutées par l'au moins un processeur, amènent le système informatique à réaliser le procédé selon l'une quelconque des revendications 10 à 13.

15. Support de stockage non transitoire lisible par ordinateur comprenant des instructions exécutables par ordinateur qui, lorsqu'elles sont exécutées par au moins un processeur, amènent le processeur à réaliser un procédé selon l'une quelconque des revendications 1 à 8 ou 10 à 13.
